(19) Europäisches Patentamt
European Patent Office
Office européen des brevets

(11) **EP 1 486 871 B1**

(12) **EUROPEAN PATENT SPECIFICATION**

(45) Date of publication and mention
of the grant of the patent:
**29.08.2007 Bulletin 2007/35**

(51) Int Cl.:
***G06F 11/10*** *(2006.01)*

(21) Application number: **04021632.7**

(22) Date of filing: **17.11.1997**

(54) **Disk array device and method for controlling the same**

Speicherplattenanordnung und Verfahren zu deren Steuerung

Dispositif de réseau de disques et sa méthode de commande

(84) Designated Contracting States:
**DE FR GB**

(30) Priority: **21.11.1996 JP 31052096**

(43) Date of publication of application:
**15.12.2004 Bulletin 2004/51**

(62) Document number(s) of the earlier application(s) in accordance with Art. 76 EPC:
**97120114.0 / 0 844 561**

(73) Proprietor: **Hitachi, Ltd.**
**Chiyoda-ku,**
**Tokyo 101-8010 (JP)**

(72) Inventors:
• **Katsuragi, Eiji**
**Odawara-shi (JP)**
• **Ogata, Mikito**
**Odawara-shi (JP)**
• **Kurano, Akira**
**Odawara-shi (JP)**
• **Tamiya, Toshihiko**
**Hadano-shi (JP)**
• **Yamamoto, Akira**
**Sagamihara-shi (JP)**
• **Takahashi, Naoya**
**Yokohama-shi (JP)**

(74) Representative: **Strehl Schübel-Hopf & Partner**
**Maximilianstrasse 54**
**80538 München (DE)**

(56) References cited:
**EP-A- 0 594 464          EP-A- 0 660 236**
**EP-A- 0 701 208          US-A- 5 191 584**
**US-A- 5 398 253**

• **PATENT ABSTRACTS OF JAPAN vol. 0173, no. 48 (P-1566), 30 June 1993 (1993-06-30) & JP 5 046324 A (HITACHI LTD), 26 February 1993 (1993-02-26) & US 5 734 812 A (TAKAMATSZU HISASHI ET AL) 31 March 1998 (1998-03-31)**

**Description**

BACKGROUND OF THE INVENTION

Field of the Invention

The present invention relates to a disk array technique and a technique for controlling the disk array, and more particularly to the technique for effectively enhancing efficiency and reliability of a process for redundant data generated in writing data.

Description of the Related Art

David A. Patterson et al. have reported in "A Case for Redundant Arrays of Inexpensive Disks (RAID)", University of California Report, 1.12.1987, pp. 109-116, XP000577756, a method for saving redundant data in part of a storage device. This method takes the steps of preparing a plurality of storage devices (disk drives), dividing the I/O data from a host computer into the corresponding number of parts to the number of the storage devices, recording and reproducing the divided data into and from the storage devices, and recovering fault data from a normal storage device(s) if a temporary or permanent failure takes place in some of the storage devices. This reports said that the following two methods are provided for generating redundant data.

The first method for generating the redundant data, which is referred to as a method of read and modify, is arranged to use write data from a host computer, previous data (data before update) stored in a storage device where the write data is to be stored, and previous data (data before update) stored in a storage device where the generated redundant data is to be stored for the purpose of generating the redundant data. In this method, assuming that the divisional number of the write data is a, for all the storage devices, the I/Os for writing take place a + 1 times and the I/Os for reading take place a + 1 times as well. The total I/O times reach $2 \times a + 2$. If the storage device does not contain the redundant data, the access times are a. It means that the use of the redundant data results in increasing the I/O times by a + 2.

The second method for generating the redundant data, which is referred to as a method of all stripes, is arranged to use the divided parts of write data from the host computer and data read from the storage devices except those for saving the redundant data belonging to the ECC group that does not save the write data from the host computer, for the purpose of generating the redundant data.

With this method, assuming that the divisional times of the write data is a and the number of the storage devices composing an ECC group, except those for saving the redundant data, is b, the times of I/Os to and from the storage devices are totally b + 1, wherein the I/O times for reading are a and the I/O times for writing data containing the redundant data are a + 1. For the storage devices that do not contain the redundant data, since the access times are a, the use of the redundant data results in increasing the I/O times by b + 1 - a.

Apart from the foregoing methods, the method for generating the redundant data in the storage device has been disclosed in a U.S. Patent No. 5,613,088, wherein the redundant data is generated in the storage device provided with two heads for read and write. Concretely, the read head and the write head are fixed on a common actuator so that the read head reads parity data before update and then the write head writes on the same area updated parity data generated from the parity data before update unless the disk spins once.

The foregoing two methods for generating the redundant data, that is, the method of read and modify and the method of all stripes, have the increased number of I/Os when writing the data because of the use of the redundant data. This means that the disk control device with redundancy is inferior in performance to the disk control device without redundancy. Hence, the conventional disk control device with redundancy selectively employs the method with a smaller number of I/Os to and from the storage device for the purpose of reducing the I/Os to and from the storage device in writing data. This selection makes it possible to reduce the burden on the storage device and thereby improve the processing speed. Concretely, in the case of a ≥ (b - 1)/2, the method of all stripes has a smaller increase of I/O times for the storage device than the method of read and modify, while in the case of a < (b - 1)/2, the method of read and modify has a smaller increase. By using this, if the data length of the write data from the host computer is in the range of a < (b - 1) /2, for example, in the case of a transaction process, the disk control device arranged to use the method for generating the redundant data operates to generate a parity through the effect of the method of read and modify. The I/O times for the storage device becomes four at minimum when a = 1, which is the smallest load burdened on the storage device. In other words, however, in such a case of the transaction process, it means that the critical point of performance takes place when a = 1. The performance cannot be improved further unless the method of process at this time is reconsidered. The problem about the method of read and modify is essentially based on the fact that two I/Os are issued to the storage device for saving the redundant data and a mechanical overhead such as movement of the head and spinning on standby is burdened at each I/O time. The mechanical overhead is a great bottleneck on the disk control device that is in electric operation.

The method disclosed in a U.S. Patent No. 5,613,088 makes it possible to generate the redundant data in the storage device provided with two heads for read and write, thereby reducing the spinning times of the drive on standby. In case this method is expanded to a general storage device provided with a single head, the resulting method takes the steps of transferring the updated data and the data before update read from the storage device to the storage for saving the redundant data and enabling the storage device for saving the redundant data to read the redundant data before update and generate the redundant data from the transferred updated data, the data before update, and the redundant data before update. This method is referred to as a method of a generation in a drive. In this method, when the head is positioned to read the redundant data before update after the spinning on standby and reaches the next writing position, the write is started. This operation makes it possible to avoid the spinning on standby during the writing interval and merely needs one movement of the head and one standby spin. As a result, if the length of the data from the host computer is short, the processing speed of the control device can be improved further.

However, the method of a generation in a drive cannot necessarily offer the essential effects depending on an access pattern from the host computer, the load burdened on the storage device, and the like.

That is, if the length of the generated redundant data is longer than one spin of the disk, that is, the length of the write data from the host computer is longer than one spin of the disk, the method of a generation in a drive is required for the disk to spin on standby during the interval of reading the redundant data before update and writing the updated redundant data. However, the spinning on standby results in increasing an occupying time of the drive for saving the redundant data, thereby increasing a response time of the drive for saving the redundant data. If, therefore, the length of the redundant data is one spin, the method of a generation in a drive has a problem that the disk array device has a lower response time.

The method of a generation in a drive is arranged to increase the data before update to be read out as the divisional number of the write data from the host computer becomes more, thereby increasing the load burdened on the storage device. Hence, if the divisional number of the write data is great, the method of a generation in a drive disadvantageously puts the throughput of the disk array device into a lower value.

The use of the method of a generation in a drive makes it possible to increase an occupying time of the drive for saving the redundant data at each spin as compared with the method of read and modify, thereby increasing the load burdened on the drive for saving the redundant data in the highly multiplexing and high load environment. Hence, the method of a generation in a drive may enhance a probability that the drive for saving the redundant data is in use, thereby lowering the throughput of the drive.

When the write data is transferred from the host computer to the disk control device together with an explicit specification of consecutive pieces of data, the method of a generation in a drive operates to immediately generate the redundant data on the transferred write data. As a result, when the succeeding write data is transferred from the host computer, the method of all stripes may lose a chance of generating the redundant data in correspondence to the first write data. Hence, if the method of a generation in a drive cannot use the method of all stripes, this disadvantageously lowers the efficiency of generating the redundant data, thereby degrading the throughput of the disk array device.

When the method of a generation in a drive uses the generation of the redundant data, the generation of the redundant data becomes unsuccessful because of any failure such as failure caused in reading the redundant data before update. In this case, the redundancy of the ECC group may be lost at once.

Document JP-A-05046324 discloses a disk array storing data records and parity records, wherein the parity data is generated and stored in the disk drives.

SUMMARY OF THE INVENTION

The invention is defined in detail in the appended independent claims 1 and 5.

It is an object of the present invention to avoid the spinning on standby caused if the data length of the write data from an upper system is longer than one spin and improve a response time of the disk array device caused if the disk drive composing the disk array generates the redundant data.

It is a further object of the present invention to improve a throughput of the disk array device by selecting the most approximate method for generating redundant data so that the necessary reading number of the data before update is made minimal according to the divisional number of the write data received by the upper system.

It is a yet further object of the present invention to improve a response time of the disk array device by reducing an occupying time for one spin of the disk drive in the case of generating the redundant data through the effect of the disk drive composing the disk array.

It is another object of the present invention to improve a throughput of a disk array device by enhancing the efficiency of generating the redundant data in association with the process for write data according to an access pattern required by the upper system.

It is still another object of the present invention to enhance reliability of a process for generating the redundant data through the effect of the disk drive composing the disk array.

According to the invention, a disk array device having a plurality of disk drives composing a disk array and a disk control device for controlling those disk drives includes a plurality of means for generating the redundant data in different ways, and a selective control logic for selectively executing at least one of the plurality of means for generating redundant data.

The disk array device including a plurality of disk drives composing a disk array and a disk control device for controlling the disk drives is dynamically switched from the generation of the redundant data in the disk control device to the generation of the redundant data inside of the disk drive according to an operating status.

Concretely, as an example, the disk array device according to the invention includes the following components.

That is, the disk array device composing a plurality of disk drivers, which is arranged to set a logic group of a partial set of the disk drives and save the redundant data in part of the logic group for the purpose of recovering the fault data from the normal disk drives when some of the disk drives are disabled by temporary or permanent failure, provides means for generating the redundant data in each of the disk drives.

The disk control device includes a first redundant data generating circuit inside of a control device for generating new redundant data from the divided write data received from the upper system, and the previous data to be updated by the divided write data, and the redundant data of the data group of the divided write data, a second redundant data generating circuit inside of the control device for generating new redundant data of the data group from the data that is not updated by the divided write data contained in the data group, and a selective control circuit for selecting a difference data generating circuit for generating difference data from the divided write data received from the upper system and the previous data updated by the divided write data and the circuit for generating the redundant data.

Further, the disk control device provides means for determining a data length of the write data received from the upper system, means for detecting a load of the drive for saving the redundant data, means for determining if the transfer of consecutive pieces of data from the upper system is explicitly specified, and means for detecting if the generation of the redundant data inside of the disk drive for saving the redundant data is failed. The selective control circuit operates to select a proper method for generating the redundant data.

The disk array device and the method for controlling the disk array device as described above are served as follows an an example.

The disk array device operates to determine the data length of the write data sent from the upper system and generate the redundant data in the disk drive if the data length is determined to be shorter than one spin of the disk. Hence, the disk array device operates to suppress the spinning on standby caused inside of the disk drive for saving the redundant data, thereby improving a throughput of the disk array device.

If the data length of the write data sent from the upper system is determined to be longer than one spin of the disk, the difference data between the divided write data and the data before update stored on the disk drive for saving the divided data is transferred onto the disk drive for saving the redundant data. The disk drive for saving the redundant data operates to generate the redundant data from the difference data and the redundant data before update, thereby suppressing the spinning on standby caused in the disk drive for saving the redundant data and improving the throughput of the disk array device accordingly.

The method for controlling the disk array device is executed to determine a load burdened on the disk drive for saving the redundant data, generate the redundant data in another disk control device without having to actuate the method of a generation in a drive if the load is determined to be greater than or equal to a given value, for the purpose of distributing the load associated with the generation of the redundant data. In the highly multiplexing and high load environment, by suppressing the increase of the load to be put on the disk drive for saving the redundant data, it is possible to suppress the probability that the disk drive for saving the redundant data is in use and thereby improve the throughput of the disk array device.

The method for controlling the disk array device is executed to determine if the transfer of consecutive pieces of data from the upper system to the disk control device is explicitly specified and generate the redundant data in the block a short time after the write data reaches a sufficient length without immediately generating the redundant data, if the explicit transfer of the consecutive data is specified. This enables to improve the efficiency of generating the redundant data and the throughput of the disk array device.

When the method of a generation in a drive fails in generating the redundant data, the method for generating the redundant data is switched to another method. This makes it possible to increase the changes of recovering the failure and thereby improving reliability of the disk array device.

BRIEF DESCRIPTION OF THE DRAWINGS

Fig. 1 is a diagram showing an arrangement of an information processing system including a disk array device according to the present invention;

Fig. 2 is a view showing an internal arrangement of a disk drive used in the disk array device according to the present invention;

Fig. 3 is a view showing an example of mapping data to be given to and received from an upper system in the disk drive used in the disk array device according to the present invention;

Fig. 4 is a diagram showing an arrangement of hardware of an information processing system including a disk array device according to the present invention;

Fig. 5 is a flowchart showing an example of a process for selecting a method for generating redundant data in a disk array device according to the present invention;

Fig. 6 is a concept view showing a flow of data executed in generating redundant data through the effect of a method of all stripes in the disk array device according to the present invention;

Fig. 7 is a concept view showing a flow of data executed in generating redundant data through the effect of a method of a generation in a drive in the disk array device according to the present invention;

Fig. 8 is a concept view showing a flow of data executed in generating redundant data through the effect of a method of read and modify in the disk array device according to the present invention;

Fig. 9 is a concept view showing a flow of data executed in generating redundant data through the effect of a method of difference in a disk array device according to an embodiment of the present invention; and

Fig. 10 is a view showing an arrangement of a cache directory in the disk control device included in the disk array device according to an embodiment of the present invention.

## DESCRIPTION OF THE PREFERRED EMBODIMENTS

Hereafter, an embodiment of the invention will be described in detail with reference to the appended drawings.

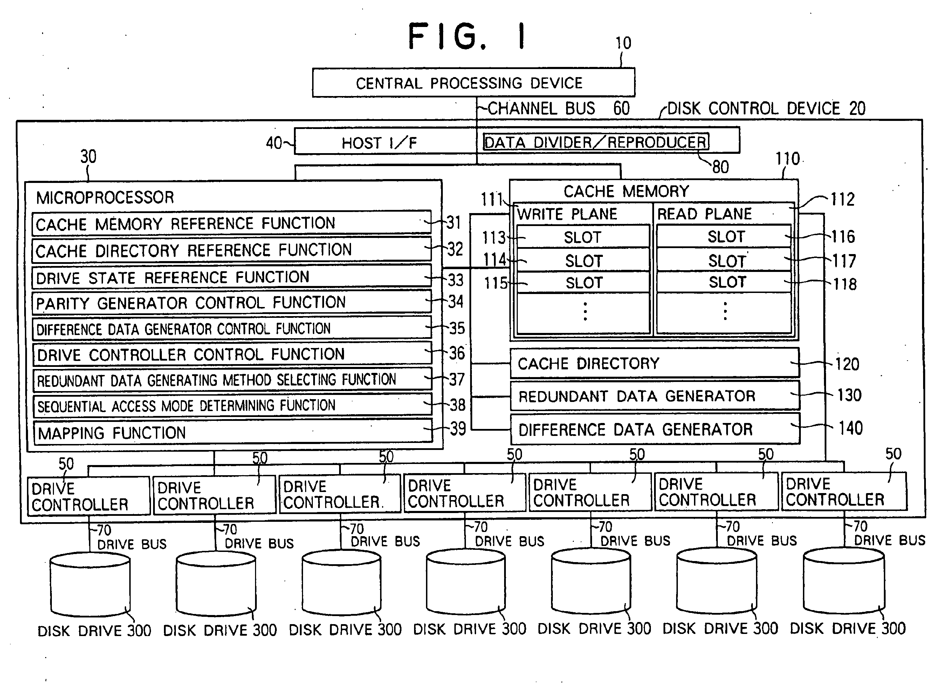

Fig. 1 is a concept showing an arrangement of an information processing system including a disk array device according to an embodiment of the present invention. The information processing system according to this embodiment is arranged to have a central processing device 10 (referred to as a host 10) and a disk array device connected thereto. The disk array device is configured of a disk control device 20 and seven disk drives 300 (300a to 300g) to be operated independently of each other, each of which disk drive may be a magnetic disk unit, for example. These seven disk drives 300 compose an ECC group (on which unit data is recovered when failure takes place. The host 10 is coupled with the disk control device 20 through a channel bus 60. The disk control device 20 is connected to each disk drive 300 through the corresponding drive bus 70 so that each disk drive 300 may be operated independently of each other.

The disk control device 20 is arranged to have a host I/F 40, a data divider/reproducer 80, a microprocessor 30, a cache memory 110, a cache directory 120, a redundant data generator 130, a difference data generator 140, and a drive controller 50. The host I/F 40 and the data divider/reproducer 80 is coupled to a channel bus 60, the cache memory 110, and the microprocessor 30 through signal lines. The microprocessor 30 is coupled to the cache memory 110, the cache directory 120, the redundant data generator 130, the difference data generator 140, and the drive controller 50 through signal lines. The cache memory 110, the cache directory 120, the redundant data generator 130, the difference data generator 140, and the drive controller 50 are controlled by a cache memory reference function 31, a cache directory reference function 32, a drive state reference function 33, a redundant data generator control function 34, a difference data generator control function 35, and a drive controller control function 36, all of which are executed by micro programs built in the microprocessor 30.

The microprocessor 30 includes a redundant data generating method selecting function 37 served as means for determining the method for generating the redundant data, a sequential access mode determining function 38 served as means for checking if the sequential access from the host 10 is specified, and a mapping function 39 served for calculating a write position on the actual disk drive 300 from the write data from the host 10. Those functions are executed by the micro programs built in the microprocessor 30 itself.

The cache memory 110, the cache directory 120, the redundant data generator 130, and the difference data generator 140 are coupled through signal lines. The cache memory 110 is coupled to the drive controller 50 through a signal line so that data is allowed to be transferred between the cache memory 110 and the drive controller 50. The cache memory 110 is divided into a write plane 111 on which the write data from the host 10 is saved and a read plane 112 on which the data read from the disk drive 300 is saved. Each of the read plane 112 and the write plane 111 contains slots 113 to 118 on which each plane is divided into sectors.

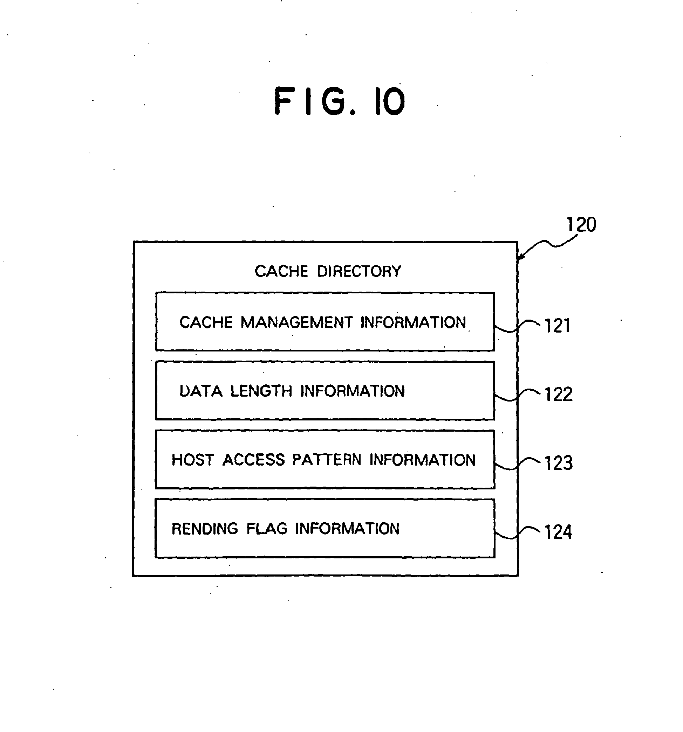

Fig. 10 is a concept view showing an arrangement of a cache directory 120 according to this embodiment. In this embodiment, the cache directory 120 contains several kinds of information to be set thereto. Those kinds of information include cache managing information 121 for managing data of the cache memory 110, data length information 122 for saving a data length received from the host 10, access pattern information 123 for storing the access pattern in the case of specifying an access pattern such as a random access and a sequential access from the host 10, and pending flag information 124 for saving a pending flag for holding a data write process containing generation of redundant data until a series of sequential accesses are terminated if the access pattern is the sequential pattern.

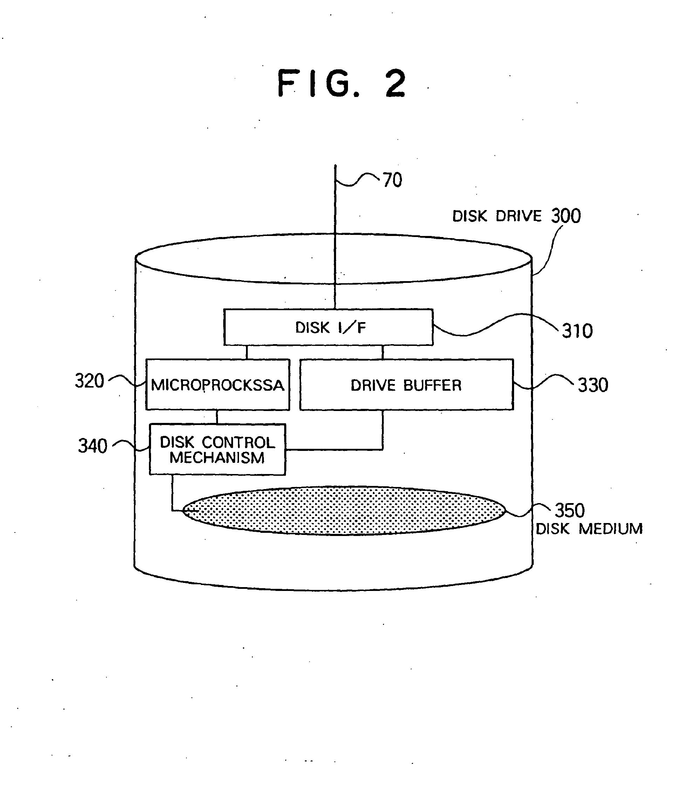

Fig. 2 is a concept view showing an internal arrangement of the disk drive used in this embodiment. The disk drive 300 includes a disk I/F 310 for controlling transfer of information between the disk drive 300 and the outside through the drive bus 70, a drive buffer 330 for temporarily holding data received from the outside and data read from an inside disk medium 350, a disk control mechanism 340 for controlling a positioning operation of a head (not shown) with respect to the disk medium 350, and a microprocessor 320 for controlling all of those components. The disk I/F 310, the drive buffer 330 and the disk control mechanism 340 are coupled to the microprocessor 320 through signal lines and are controlled by the microprocessor 320.

In this embodiment, the microprocessor 320 of each disk drive 300 has a function of generating new redundant data from the data received from the outside and the redundant data before update saved in the disk medium 350 inside of the disk drive 300 itself and then saving the new redundant data in the disk medium 350 inside of the disk drive 300. This function may be executed by the microprocessor 320 or any leased hardware except the microprocessor 320.

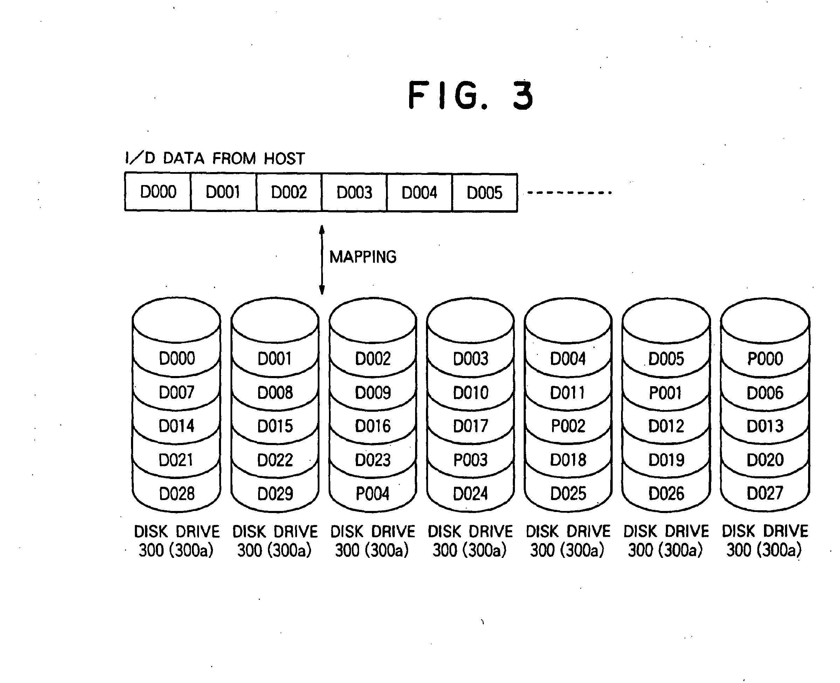

Fig. 3 is a concept view showing an example of mapping I/O data to be given to or received from the host 10 onto the disk medium 350 located inside of the disk drive. In this embodiment, the data recording area of the disk medium 350 of each disk drive 300 is logically divided into a plurality of unit areas. The concatenation of each unit area of the disk drives 300a to 300g composes a data group containing at least one piece of redundant data.

That is, the redundant data P000 (parity) is located on the unit area of the most right disk drive 300g of the first column. On the second column or later, the redundant data is shifted by one to the left hand of the storage position of the parity on the previous column. If the storage position of the redundant data of one previous column is located on the leftmost disk drive 300a, the redundant data P001- is located on the most right disk drive 300g. The divisions D000 to D029 of the write data from the host 10 are sequentially mapped from the disk drive located immediately in the right hand of the redundant data or the leftmost disk drive 300 if the redundant data is located in the most right hand. The redundant data of each column is generated to be equal to the exclusive OR of the data of each column, for example, D000 to D005 and then is saved. If one failure takes place in one data piece of each row, the fault data can be recovered by the exclusive OR of the remaining data inside of the column with the redundant data.

In addition, the redundant data for error recovery may be an exclusive OR of a group of plural divided data as well as any code such as a hamming code.

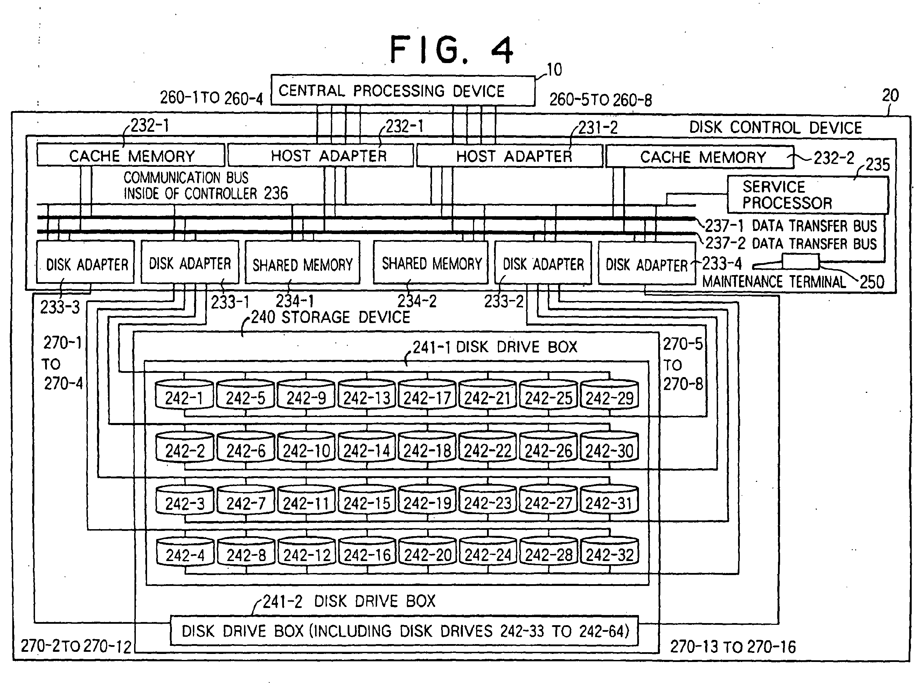

Fig. 4 is a concept view showing the arrangement of the disk array device according to this embodiment. The channel bus 60 shown in Fig. 1 corresponds to 260-1 to 260-8. The host I/F 40 and the data divider/reproducer 80 shown in Fig. 1 correspond to host adapters 231-1 and 231-2. The microprocessor 30, the drive controller 50, the redundant data generator 130, and the difference data generator 140 shown in Fig. 1 correspond to disk adapters 233-1 to 233-4. The cache memory 110 shown in Fig. 1 corresponds to cache memories 232-1 to 232-2. The cache directory 120 shown in Fig. 1 corresponds to shared memories 234-1 to 234-2. The drive path 70 shown in Fig. 1 corresponds to 270-1 to 270-16.

The host adapters 231-1 to 232-2, the cache memories 232-1 to 232-2, the disk adapters 233-1 to 233-4, and the shared memories 234-1 to 234-2 are connected to each other through doubled data transfer buses 237-1 to 237-2.

Under the control of the disk control device 20, the inside of each of the disk drive boxes 241-1 to 241-2 is connected to a storage device 240 arranged to accommodate the disk drives 242-1 to 242-32 and the disk drives 242-33 to 242-64.

The host adapters 231-1 to 232-2, the disk adapters 233-1 to 233-4, and the shared memories 234-1 to 234-2 are connected to a service processor 235 through a communication path 236 inside of a control unit. This service processor 235 is handled from the outside through a maintenance terminal 250.

Fig. 1 illustrates a single ECC group (group of disk drives), while Fig. 4 illustrates totally eight ECC groups (group of disk drives). The disk drives 242-1 to 242-7, 242-9 to 242-15, 242-17 to 241-23, and 242-25 to 242-31 correspond to ECC groups. The disk drives 242-8, 242-16, 242-24 and 242-32 are spared disk drives. So are the disk drives 242-33 to 242-64.

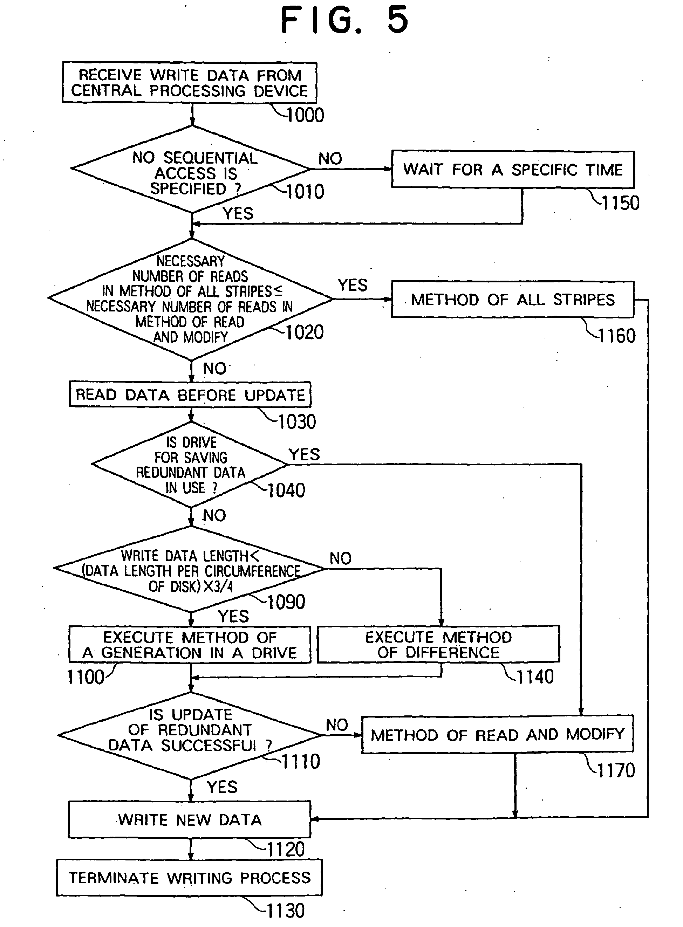

The description will be oriented to how the microprocessor is operated with respect to the disk control device 20 arranged as described above when the host 10 issues the write data to the microprocessor along the flow shown in Fig. 5. The write data from the host 10 is transferred to the disk control device 20 through the channel bus 60 and is divided into sector lengths by the data divider/reproducer 80. When the host I/F 40 serves to save each division in the slot of the write plane 111 of the cache memory, at a step 1000 of Fig. 5, the microprocessor 30 operates to count the number of data lengths transferred from the host I/F 40 to the cache memory 110 and then save the count value in a data length information 122 included in the cache directory 120. Proceeding to a step 1010, the sequential access mode determining function 38 is executed to determine if the access specification is sequentially given from the host 10. The presence or absence of the sequential access specification is saved in the host access pattern information 123 of the cache directory 120.

If the sequential access is specified, the operation goes to a step 1150. At this step, the termination of the writing process is reported to the hots 10 without immediately generating the redundant data. Then, for indicating the write data is not reflected on the disk drive 300, a pending flag is raised to the pending flag information 124 on the cache directory 120 and then the microprocessor 30 is waiting for a specified time. This is because there exists a high probability that the succeeding write data from the host 10 is issued if the sequential access is specified and that the method of all stripes may be used for generating the redundant data by using plural pieces of write data. Hence, the transfer of the succeeding data allows the microprocessor to just wait until the stripes (a set of slots to be written on the same position of the different disk drives) are made to be the write data. The proper waiting time is calculated by (date length of the stripe - transferred data length)/data transfer speed from the host. After the wait for a specified time, the operation goes to a step 1020.

If no sequential access is specified from the host at the step 1010, the operation at the step 1020 is immediately executed. The microprocessor 30 operates to calculate the positions of the disk drive 300 where the write data of each slot is saved and of the disk medium 350 through the effect of the mapping function 39 for the purpose of deriving the column on the disk drive 300 where the write data is to be written. Next, the microprocessor 30 operates to calculate the number of the read processes of the data before update through the effect of the redundant data generating method selecting function 37. This number of the read processes is required to generate the redundant data through the effect of the method of read and modify. This is calculated as the number of the slots of the write data plus one. Next, the processor 30 operates to calculate the number of read processes through the effect of the redundant data generating method selecting function 37. This number of read processes is required to generate the redundant data through the effect of the method of all stripes. This is a value calculated by subtracting the number of the disk drives 300 for saving the write data from the number of the disk drives 300 for saving the data. Then, the redundant data generating method selecting function 37 is executed to compare the necessary number of reads in the method of all stripes with the necessary number of reads in the method of read and modify. If the conditional expression of:

$$
\text{(the necessary number of reads in the method of all stripes)} \leq \text{(the necessary number of reads in the method of read and modify)} \quad ...(1)
$$

is met, the method of all stripes is selected. Then, the operation goes to a step 1160.

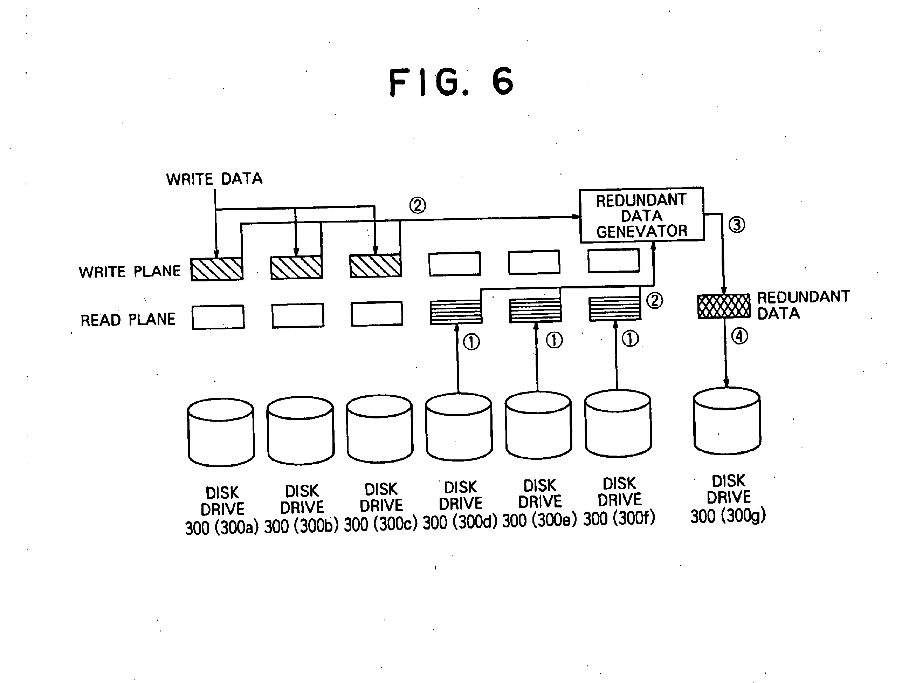

The method of all stripes (second redundant data generating means) is made to be a stream of data shown in Fig. 6. At first, the request for read is issued to the disk drive 300 required for a read process, that is, the drive controller 50 for controlling the disk drives 300 (300d to 300f) for saving data that are not intended for the write process. Then, the data on the disk drives 300 (300d to 300f) are read by the read plane 112 of the cache memory 110 (see (1) of Fig. 6). The write data saved on the write plane 111 and the data read on the read plane 112 are transferred to the redundant data generator 130 (see (2) of Fig. 6). The redundant data generator 130 operates to generate the redundant data and saves it in the read plane 112 of the cache memory 100 (see (3) of Fig. 6). Next, the drive controller control function 36 utilizes the drive controller 60 so that the redundant data on the read plane 112 of the cache memory 110 is transferred to the disk drive 300 (300g) for saving the redundant data. This is the completion of reflecting the redundant data on the disk drive 300 (see (4) of Fig. 6).

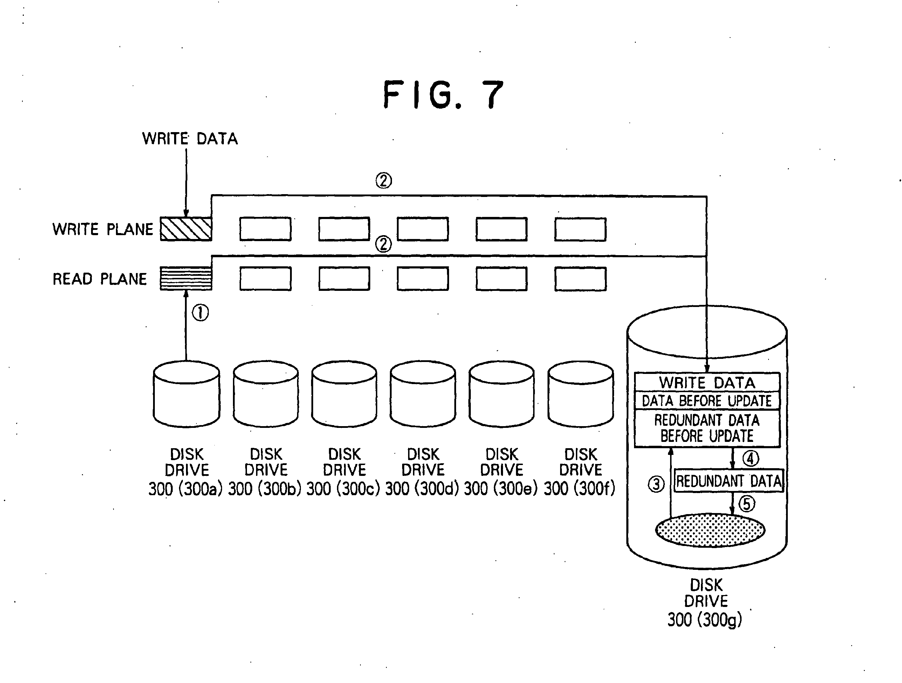

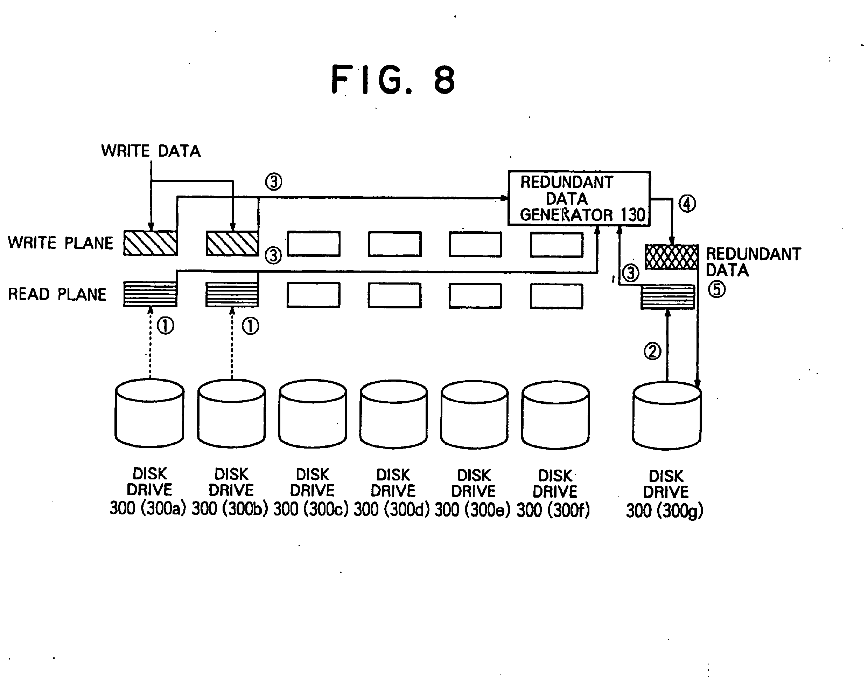

In place, if the expression 1 is not met, the operation goes to a step 1030. As shown in (1) of Fig. 7 or 8, the request for reading the write data before update is issued to the disk drives 300 (300a to 300b) for saving the write data and then is transferred onto the read plane 112 of the cache memory 110. Then, the operation goes to a step 1040. The drive state reference function 33 is executed to check if the disk drive 300 (300g) for saving the redundant data is in use. If it is in use, the operation goes to a step 1170.

If the disk drive 300 (300g) for saving the redundant data is not in use, the operation goes to a step 1090. The redundant data generating method selecting function 37 is executed to derive a cylinder number (#) on the disk medium 350 from the position on the disk medium 350 where the redundant data is saved and calculate a data length at each turn of the cylinder # (track). In the case of a constant density recording whose information recording capacity per cylinder of an inner circumference is different from that of an outer circumference, the data length for one circumference can be easily obtained since the data length is a function of the cylinder #. In addition, if the information recording capacity per cylinder of the inner circumference is equal to that of the outer circumference, this calculation is not necessary. The data length per circumference in any cylinder can be immediately obtained from the device specification of the disk drive 300.

Next, the microprocessor 30 operates to compare the data length per circumference with the data length of the write data saved in the cache directory 120 and determine if the spinning on standby takes place. In actual, an overhead takes place for operating the redundant data inside of the micro program. Assuming that the overhead is 1/n of one spin time of the disk medium 350. Since the write data length is required to be within one spin time containing the overhead time, the condition for comparison is:

$$\text{Write Data Length} < (\text{Date Length per circumference of}$$

$$\text{Disk Medium}) \times (1 - 1/n) \qquad ...(\text{expression 2})$$

When this condition is met, the redundant data generating method selecting function 37 is executed to select the method for generating the redundant data through the effect of the method of a generation in a drive (third means for generating redundant data). Then, the operation goes to a step 1100. At a step 1090 shown in Fig. 5, it is assumed that an overhead (1/n) for operating the redundant data inside of the micro program is 1/4.

The operation in this assumption is executed as shown in Fig. 7. The write data on the write plane 111 and the data before update on the read plane 112 are transferred to the disk drive 300 (300g) (see (2) of Fig. 7). The write data transferred from the disk control device 20 and the data before update are transferred to a drive buffer 330 through a disk I/F 310. In synchronous with it, the microprocessor 320 located inside of the disk drive 300 operates to position the head at the position where the redundant data before update is saved through the disk control mechanism 340. On the termination of the positioning operation, the redundant data before update is read into the drive buffer 330 (see (3) of Fig. 7). The exclusive OR of the redundant data before update to be read, the write data having been stored in the buffer, and the data before update is calculated by the microprocessor 320 for generating the new redundant data and storing it in the drive buffer 330 (see (4) of Fig. 7). Next, when the disk medium 350 is spinned once and reaches the positioning point, the microprocessor 320 operates to write the redundant data on the drive buffer 330 (see (5) of Fig. 7). The disk drive 300 reports a success or failure of the generation and the write of the redundant data to the disk control device 20. When the write of the redundant data becomes successful, the operation goes to the next step 1110. The microprocessor 30 operates to detect if the update of the redundant data becomes successful or failed. If it is successful, the operation goes to a step 1120.

When the update of the redundant data is failed, the operation goes to a step 1170. At this step, for the retry process to be executed if the update of the redundant data is failed or the redundant data is in use, the redundant data generating method selecting function 37 is executed to select the method of read and modify.

The method of read and modify (first means for generating the redundant data) is executed as shown in Fig. 8. That is, since the data before update has been read into the read plane 112 of the cache memory 110, only the redundant data before update on the disk drive 300 (300g) for saving the redundant data is read onto the read plane 112 of the cache memory 110 (see (2) of Fig. 8). Then, the write data, the data before update, and the redundant data before update are transferred into the redundant data generator 130 (see (3) of Fig. 8) for generating the redundant data from those pieces of data and then saving the generated redundant data on the write plane 111 of the cache memory 110 (see (4) of Fig. 8). Next, the generated redundant data is written in the disk drive 300 (300g) for saving the redundant data (see (5) of Fig. 8). This is the completion of updating the redundant data.

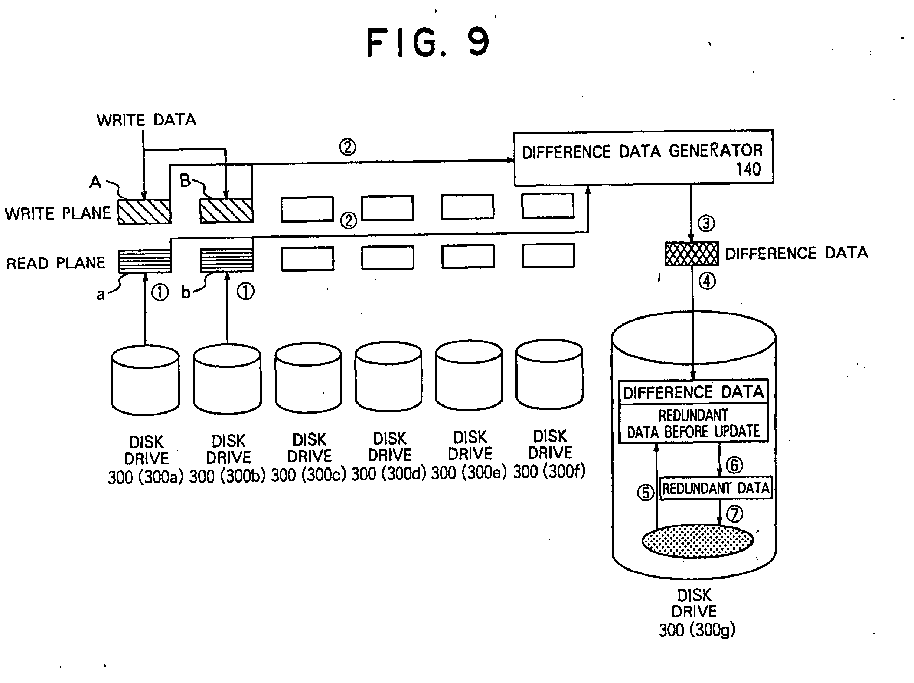

Next, if neither of the conditional expressions (1) and (2) are met, the operation goes to a step 1140. At this step, the redundant data generating method selecting function 37 is executed to select the method of difference (fourth means for generating the redundant data) as the method for generating the redundant data. As shown in Fig. 9, the flow of the process is as shown in Fig. 9. The difference data generator control function 35 is executed to transfer the write data on the write plane 111, the data before on the read plane 112, and the difference data generator 140 (see (2) of Fig. 9) for generating the difference data and saving it on the read plane 112 (see (3) of Fig. 9) of the cache memory 110.

Assuming that the redundant data is the exclusive ORed data, for example, the difference data, termed herein, means the data given by taking an exclusive OR of the data A and B on the write plane 111 and the previous data a and b on the corresponding read plane 112 to the write plane 111, all of which are shown in Fig. 9.

Next, the drive controller control function 36 is executed to transfer the difference data on the read plane 112 of the cache memory 110 to the disk drive 300 (300g) for saving the redundant data through the use of the drive controller 50 (see (4) of Fig. 9). The difference data transferred to the disk control device 20 is then transferred to the drive buffer 330 through the disk I/F 310. In synchronous with it, the microprocessor 320 located inside of the disk drive 300 operates to position the head at the position where the redundant data before update is saved through the disk control mechanism 340. When the positioning operation is terminated, the microprocessor 320 operates to read the redundant data before update (see (5) of Fig. 9) and calculate an exclusive OR of the redundant data before update to be read and the difference data saved in the drive buffer 330 for generating the redundant data (see (6) of Fig. 9) and saving it in the drive buffer 330. Next, when the disk medium 350 spins once and reaches the positioning point, the microprocessor 320 operates to write the redundant data saved in the drive buffer 330 on the disk medium 350. If the write of the redundant data becomes successful, the disk drive reports the normal termination to the disk control device 20.

On the other hand, the microprocessor 30 located inside of the disk control device 20 operates to recognize that the generation of the redundant data becomes successful through the drive controller. Next, the operation goes to a step 1120. At this step, the write data is written in the disk drive 300. Then, proceeding to a step 1130, a series of writing operations are terminated.

The disk array device and the method for controlling the disk array device according to this embodiment are controlled to select the most approximate method for generating the redundant data from the method of all stripes and the method of read and modify, both of which are executed to generate the redundant data on the disk control device 20 according to the length of the write data received from the host 10, the access pattern such as sequential accesses, whether or not the redundant data is in use (that is, the magnitude of load) in the disk drive 300, and whether or not a failure takes place in the process of generating and saving the redundant data, as well as the method of a generation in a drive and the method of difference, both of which are executed to generate the redundant data on the disk drive 300. Hence, the disk array device and the control method thereof make it possible to reduce an overhead accompanied with the generation of the redundant data in processing the write data, improve a response time and a throughput of the disk array device in the process for writing the data, and enhance the reliability of generation of the redundant data.

The foregoing description has been concretely expanded along the embodiments of the invention. However, it goes without saying that the present invention is not limited to the foregoing embodiments.

For example, the present invention may widely apply to a magnetic disk device provided with the magnetic disk as a medium as well as a disk array device providing as a storage unit a disk drive having a general rotary storage medium such as an optical disk unit or a magnetooptical disk unit.

The disk array device according to the invention offers the effect of avoiding the spinning on standby caused if the data length of the write data sent from the host system is longer than one spin of the disk medium and thereby improving a response time when the redundant data is generated by the disk drive composing a disk array.

The disk array device according to the invention offers the effect of selecting the most approximate redundant data generating method that makes the necessary number of reads of the data before update minimal according to the divisional number of the write data received from the host system and thereby improving a throughput of the disk array device.

The disk array device according to the invention offers the effect of reducing an occupation time for one spin of the disk drive when the redundant data is generated by the disk drive composing the disk array.and thereby improving the response time of the disk array device.

The disk array device according to the invention offers the effect of enhancing the efficiency of generating the redundant data accompanied with the processing of the write data according to the access pattern requested from the upper system and thereby improving a throughput of the disk array device.

The disk array device according to the invention offers the effect of enhancing the reliability of generating the redundant data in the case of generating the redundant data in the disk drive composing the disk array.

The method for controlling the disk array device according to the invention offers the effect of avoiding the spinning on standby caused if the data length of the write data sent from the host system is longer than one spin of the disk medium and thereby improving a response time on which the redundant data is generated by the disk drive composing the disk array.

The method for controlling the disk array device according to the present invention offers the effect of selecting the most approximate redundant data generating method in which the necessary number of reads of the data before update is made minimal according to the divisional number of the write data received from the host system and thereby improving a throughput of the disk array device.

The method for controlling the disk array device according to the present invention offers the effect of reducing an occupation time for one spin of the disk drive when the redundant data is generated by the disk drive composing the disk array and thereby improving the response time of the disk array device.

The method for controlling the disk array device according to the invention offers the effect of enhancing a generating efficiency of the redundant data accompanied with the processing of the write data and thereby improving a throughput of the disk array device.

The method for controlling the disk array device according to the invention offers the effect of enhancing the reliability of generating the redundant data when the redundant data is generated by the disk drive composing the disk array.

**Claims**

1. A disk array apparatus, comprising:

  a plurality of disk drives (300) for storing write data from a higher level device (10) and storing redundant data used for the write data;
  a subset of the disk drives (300) forming a specific data group for saving, in a distributed manner, divided parts of write data received from the higher level device (10) and redundant data generated from the write data;
a disk control device, (20) for transferring the write data between the higher level device (10) and the disk drives;
a difference data generating circuit (140) inside the disk control device (20);
a first redundant data generator (320) inside the disk drive (300) for storing the redundant data and for generating new redundant data;
a second redundant data generator (130) inside the disk control device (20); and
a processor (30) inside the disc control device (20), for controlling the operations of the first and second redundant data generating circuits (130, 320),

wherein the processor (30) is adapted to select:

(i) generating new redundant data by the second redundant data generator (130) from the write data from the higher level device (10) and the data not to be updated by the write data of the data group to which the write data belongs, if the conditional expression of

$$(b+1) \leq 2^* (a+1),$$

where the write data is divided into "a" parts, and "b" is the number of disk drives used in the data group, except for the disk drive which saves the redundant data included in the data group, is met;
(ii) generating new redundant data by the second redundant data generator (130) from the write data from the higher level device, the previous data to be updated by the write data and the redundant data of the data group to which the write data belongs, if the above conditional expression is not met and the disk drive for saving the redundant data is in use;
(iii) transferring the write data and the previous data to be updated by the divided parts of the write data to the disk drive for saving the redundant data of the write data of the data group and generating new redundant data by the first redundant data generator (320) from the write data, the previous data to be updated by the write data, and the previous redundant data, if none of the conditions in (i) and (ii) is met and if the write data length is equal to or shorter than a given length; and
(iv) generating difference data by the difference data generating circuit (140), transferring the difference data to the disk drive for saving the redundant data of the write data of the data group, and generating new redundant data by the first redundant data generator (320) from the difference data and the previous redundant data, if none of the conditions in (i) and (ii) is met and the write data length is longer than the given length.

2. The apparatus of claim 1, wherein the given length is related to the length of data per one revolution of one of the disk drives for storing the write data.

3. The apparatus of claim 1 or 2, wherein the processor (30) is adapted to select:

generating the redundant data by the second redundant data generator (130) from the write data from the higher level device (10), the previous data to be updated by the write data and the redundant data of the data group to which the write data belongs, if the redundant data update operation according to (iii) or (iv) has failed.

4. The apparatus of one of the preceding claims, further comprising
a sequential access determination means (38) for determining the sequential access mode for the higher level device (10);
wherein the processor (30) is adapted to wait for a specific period of time before selecting the redundant data generation operations, if sequential access from the higher level device (10) is specified.

5. A method for controlling a disk array apparatus, the disk array apparatus comprising:

a plurality of disk drives (300) for storing write data from a higher level device (10) and storing redundant data used for the write data;
a subset of the disk drives (300) forming a specific data group for saving, in a distributed manner, divided parts of write data received from the higher level device (10) and redundant data generated from the write data; and
a disk control device (20) for transferring the write data between the higher level device (10) and the disk drives (30);

wherein the method comprises:

transferring write data from the higher level device to the disk control device and dividing it into parts;
generating redundant data for the write data; and
saving the write data and the redundant data on the disk drives;

wherein

(i) the redundant data is generated in the disk control device (1160) from the write data from the higher level device (10) and data not to be updated by the write data of the data group to which the write data belongs, if the conditional expression (1020) of

$$(b+1) \leq 2^* (a+1),$$

where the write data is divided into "a" parts, and "b" is the number of disk drives used in the data group, except for the disk drive which saves the redundant data included in the data group,
is met;
(ii) generating the redundant data in the disk control device (1170) from the write data from the higher level device (10), previous data to be updated by the write data and redundant data of the data group to which the write data belongs, if the above conditional expression is not met (1020) and the disk drive for saving the redundant data is in use (1040) ;
(iii) transferring the write data and the previous data to be updated by the divided parts of the write data to the disk drive (300) for saving the redundant data of the write data of the data group and generating redundant data therein (1100) from the write data, the previous data to be updated by the write data, and the previous redundant data, if none of the conditions in steps (i) and (ii) is met and if the write data length is equal to or shorter than a given length; and
(iv) generating difference data in the disk control device (20), transferring the difference data to the disk drive (300) for saving the redundant data of the write data of the data group, and generating new redundant data therein (1140) from the difference data and the previous redundant data, if none of the conditions in (i) and (ii) is met and the write data length is longer than the given length (1090).

6. The method of claim 5, wherein the given length is related to the length of data per one revolution of one of the disk drives for storing the write data.

7. The method of claim 5 or 6, further comprising:

generating the redundant data (1170) in the disk control device (20) from the write data from the higher level device, the previous data to be updated by the write data and the redundant data of the data group to which the write data belongs, if the redundant data update operation according to step (iii) or (iv) has failed (1110).

8. The method of one of claims 5 to 7, further comprising
determining (1010) the sequential access for the higher level device (10) ; and,
waiting for a specific period of time (1150) before selecting the redundant data generation operations, if sequential access from the higher level device (10) is specified.

**Patentansprüche**

1. Speicherplattenanordnung umfassend:

mehrere Speicherplattenlaufwerke (300) zum Speichern von Schreibdaten von einem übergeordneten Gerät (10) und zum Speichern von für die Schreibdaten verwendeten redundanten Daten;
eine Teilmenge der Speicherplattenlaufwerke (300), die eine spezifische Datengruppe zum Speichern von aufgeteilten Teilen von vom übergeordneten Gerät (10) empfangenen Schreibdaten und von aus den Schreibdaten erzeugten redundanten Daten in einer verteilten Weise bildet;
ein Speicherplattensteuergerät (20) zum Übertragen der Schreibdaten zwischen dem übergeordneten Gerät (10) und den Speicherplattenlaufwerken;

eine Differenzdatenerzeugungsschaltung (140) innerhalb des Speicherplattensteuergeräts (20);

eine erste Erzeugungseinrichtung (320) für redundante Daten innerhalb des Speicherplattenlaufwerks (300) zum Speichern der redundanten Daten und zum Erzeugen neuer redundanter Daten;

eine zweite Erzeugungseinrichtung (130) für redundante Daten innerhalb des Speicherplattensteuergeräts (20) und

einen Prozessor (30) innerhalb des Speicherplattensteuergeräts (20) zum Steuern des Betriebs der ersten und der zweiten Erzeugungsschaltung für redundante Daten (130, 320),

wobei der Prozessor (30) dazu ausgelegt ist, folgendermaßen auszuwählen:

(i) Erzeugen neuer redundanter Daten durch die zweite Erzeugungseinrichtung (130) für redundante Daten aus den Schreibdaten vom übergeordneten Gerät (10) und den Daten, die nicht durch die Schreibdaten der Datengruppe aufzudatieren sind, zu der die Schreibdaten gehören, falls die Bedingung

$$(b+1) \leq 2 \cdot (a+1),$$

wobei die Schreibdaten in "a" Teile aufgeteilt sind und "b" die Anzahl von in der Datengruppe verwendeten Speicherplattenlaufwerken außer dem Speicherplattenlaufwerk ist, das die in der Datengruppe enthaltenen redundanten Daten speichert, erfüllt ist;

(ii) Erzeugen neuer redundanter Daten durch die zweite Erzeugungseinrichtung (130) für redundante Daten aus den Schreibdaten vom übergeordneten Gerät, den durch die Schreibdaten aufzudatierenden vorherigen Daten und den redundanten Daten der Datengruppe, zu der die Schreibdaten gehören, falls die obige Bedingung nicht erfüllt ist und das Speicherplattenlaufwerk zum Speichern der redundanten Daten in Benutzung ist;

(iii) Übertragen der Schreibdaten und der durch die aufgeteilten Teile der Schreibdaten aufzudatierenden vorherigen Daten an das Speicherplattenlaufwerk zum Speichern der redundanten Daten der Schreibdaten der Datengruppe und Erzeugen neuer redundanter Daten durch die erste Erzeugungseinrichtung (320) für redundante Daten aus den Schreibdaten, den durch die Schreibdaten aufzudatierenden vorherigen Daten und den vorherigen redundanten Daten, falls keine der Bedingungen in (i) und (ii) erfüllt ist und falls die Schreibdatenlänge kleiner oder gleich einer vorgegebenen Länge ist, und

(iv) Erzeugen von Differenzdaten durch die Differenzdatenerzeugungsschaltung (140), Übertragen der Differenzdaten an das Speicherplattenlaufwerk zum Speichern der redundanten Daten der Schreibdaten der Datengruppe und Erzeugen neuer redundanter Daten durch die erste Erzeugungseinrichtung (320) für redundante Daten aus den Differenzdaten und den vorherigen redundanten Daten, falls keine der Bedingungen in (i) und (ii) erfüllt ist und die Schreibdatenlänge größer als die vorgegebene Länge ist.

2. Anordnung nach Anspruch 1, wobei sich die vorgegebene Länge auf die Länge der Daten pro Umdrehung von einem der Speicherplattenlaufwerke zum Speichern der Schreibdaten bezieht.

3. Anordnung nach Anspruch 1 oder 2, wobei der Prozessor (30) zu folgender Auswahl ausgelegt ist:

Erzeugen der redundanten Daten durch die zweite Erzeugungseinrichtung (130) für redundante Daten aus den Schreibdaten vom übergeordneten Gerät (10), den durch die Schreibdaten aufzudatierenden vorherigen Daten und den redundanten Daten der Datengruppe, zu der die Schreibdaten gehören, falls der Aufdatierungsvorgang für die redundanten Daten gemäß (iii) oder (iv) fehlgeschlagen ist.

4. Anordnung nach einem der vorhergehenden Ansprüche, ferner umfassend:

eine Einrichtung (38) zum Bestimmen von sequentiellem Zugriff für die Bestimmung des sequentiellen Zugriffsmodus für das übergeordnete Gerät (10);

wobei der Prozessor (30) dazu ausgelegt ist, einen vorgegebenen Zeitraum abzuwarten, bevor er die Erzeugungsvorgänge für die redundanten Daten auswählt, falls sequentieller Zugriff vom übergeordneten Gerät (10) spezifiziert ist.

5. Verfahren zum Steuern einer Speicherplattenanordnung, wobei die Speicherplattenanordnung umfasst:

mehrere Speicherplattenlaufwerke (300) zum Speichern von Schreibdaten von einem übergeordneten Gerät (10) und zum Speichern von für die Schreibdaten verwendeten redundanten Daten;

eine Teilmenge der Speicherplattenlaufwerke (300), die eine spezifische Datengruppe zum Speichern von aufgeteilten Teilen von vom übergeordneten Gerät (10) empfangenen Schreibdaten und von aus den Schreibdaten erzeugten redundanten Daten in einer verteilten Weise bildet, und

ein Speicherplattensteuergerät (20) zum Übertragen der Schreibdaten zwischen dem übergeordneten Gerät (10) und den Speicherplattenlaufwerken (30);

wobei das Verfahren umfasst:

Übertragen von Schreibdaten vom übergeordneten Gerät an das Speicherplattensteuergerät und Aufteilen dieser in Teile;

Erzeugen redundanter Daten für die Schreibdaten und

Speichern der Schreibdaten und der redundanten Daten in den Speicherplattenlaufwerken;

wobei

(i) die redundanten Daten im Speicherplattensteuergerät (1160) aus den Schreibdaten vom übergeordneten Gerät (10) und den Daten erzeugt werden, die durch die Schreibdaten der Datengruppe, zu der die Schreibdaten gehören, nicht aufzudatieren sind, falls die Bedingung (1020)

$$(b+1) \leq 2 \cdot (a+1),$$

wobei die Schreibdaten in "a" Teile aufgeteilt sind und "b" die Anzahl von in der Datengruppe verwendeten Speicherplattenlaufwerken außer dem Speicherplattenlaufwerk ist, das die in der Datengruppe enthaltenen redundanten Daten speichert, erfüllt ist;

(ii) die redundanten Daten im Speicherplattensteuergerät (1170) aus den Schreibdaten vom übergeordneten Gerät (10), durch die Schreibdaten aufzudatierenden vorherigen Daten und redundanten Daten der Datengruppe, zu der die Schreibdaten gehören, erzeugt werden, falls die obige Bedingung nicht erfüllt ist (1020) und das Speicherplattenlaufwerk zum Speichern der redundanten Daten in Benutzung ist (1040);

(iii) die Schreibdaten und die durch die aufgeteilten Teile der Schreibdaten aufzudatierenden vorherigen Daten an das Speicherplattenlaufwerk (300) zum Speichern der redundanten Daten der Schreibdaten der Datengruppe übertragen werden und redundante Daten dort (1100) aus den Schreibdaten, den durch die Schreibdaten aufzudatierenden vorherigen Daten und den vorherigen redundanten Daten erzeugt werden, falls keine der Bedingungen in den Schritten (i) und (ii) erfüllt ist und falls die Schreibdatenlänge kleiner oder gleich einer vorgegebenen Länge ist; und

(iv) Differenzdaten im Speicherplattensteuergerät (20) erzeugt werden, die Differenzdaten an das Speicherplattenlaufwerk (300) zum Speichern der redundanten Daten der Schreibdaten der Datengruppe übertragen und neue redundante Daten dort (1140) aus den Differenzdaten und den vorherigen redundanten Daten erzeugt werden, falls keine der Bedingungen in (i) und (ii) erfüllt ist und die Schreibdatenlänge größer als die vorgegebene Länge ist (1090).

6. Verfahren nach Anspruch 5, wobei sich die vorgegebene Länge auf die Länge der Daten pro Umdrehung von einem der Speicherplattenlaufwerke zum Speichern der Schreibdaten bezieht.

7. Verfahren nach Anspruch 5 oder 6, ferner umfassend:

Erzeugen der redundanten Daten (1170) im Speicherplattensteuergerät (20) aus den Schreibdaten vom übergeordneten Gerät, den durch die Schreibdaten aufzudatierenden vorherigen Daten und den redundanten Daten der Datengruppe, zu der die Schreibdaten gehören, falls die Aufdatierungsvorgänge für redundante Daten gemäß Schritt (iii) oder (iv) fehlgeschlagen ist (1110).

8. Verfahren nach einem der Ansprüche 5 bis 7, ferner umfassend:

Bestimmen (1010) von sequentiellem Zugriff für das übergeordnete Gerät (10) und

Abwarten eines vorgegebenen Zeitraums (1150), bevor die Erzeugungsvorgänge für redundante Daten ausgewählt werden, falls sequentieller Zugriff vom übergeordneten Gerät spezifiziert ist.

**Revendications**

1. Dispositif de réseau de disques comportant :

une pluralité d'unités de disque (300) pour mémoriser des données d'écriture d'un dispositif de niveau supérieur (10) et mémoriser des données redondantes utilisées pour les données d'écriture,

un sous-ensemble d'unités de disque (300) formant un groupe de données spécifique pour sauvegarder, d'une manière distribuée, des parties divisées de données d'écriture reçues du dispositif de niveau supérieur (10) et des données redondantes générées à partir des données d'écriture,

un dispositif de commande de disque (20) pour transférer les données d'écriture entre le dispositif de niveau supérieur (10) et les unités de disque,

un circuit de génération de données de différence (140) à l'intérieur du dispositif de commande de disque (20),

un premier générateur de données redondantes (320) à l'intérieur de l'unité de disque (300) pour mémoriser les données redondantes et pour générer de nouvelles données redondantes,

un second générateur de données redondantes (130) à l'intérieur du dispositif de commande de disque (20), et

un processeur (30) à l'intérieur du dispositif de commande de disque (20), pour commander les opérations des premier et second circuits de génération de données redondantes (130, 320),

dans lequel le processeur (30) est adapté pour sélectionner :

(i) la génération de nouvelles données redondantes par le second générateur de données redondantes (130) à partir des données d'écriture provenant du dispositif de niveau supérieur (10) et des données à ne pas mettre à jour par les données d'écriture du groupe de données auquel appartiennent les données d'écriture, si l'expression conditionnelle de

$$\texttt{(b+1)} \leq \texttt{2*(a+1),}$$

où les données d'écriture sont divisées en "a" parties, et "b" est le nombre d'unités de disque utilisées dans le groupe de données, sauf pour l'unité de disque qui sauvegarde les données redondantes incluses dans le groupe de données,

est satisfaite,

(ii) la génération de nouvelles données redondantes par le second générateur de données redondantes (130) à partir des données d'écriture provenant du dispositif de niveau supérieur, des précédentes données destinées à être mise à jour par les données d'écriture et des données redondantes du groupe de données auquel appartiennent les données d'écriture, si l'expression conditionnelle ci-dessus n'est pas satisfaite et l'unité de disque pour sauvegarder les données redondantes est en cours d'utilisation,

(iii) le transfert des données d'écriture et des précédentes données à mettre à jour par les parties divisées des données d'écriture vers l'unité de disque pour sauvegarder les données redondantes des données d'écriture du groupe de données et la génération de nouvelles données redondantes par le premier générateur de données redondantes (320) à partir des données d'écriture, et des précédentes données à mettre à jour par les données d'écriture, et des précédentes données redondantes, si aucune des conditions dans (i) et (ii) n'est satisfaite et si la longueur de données d'écriture est plus petite ou égale à une longueur donnée, et

(iv) la génération de données de différence par le circuit de génération de données de différence (140), le transfert des données de différence vers l'unité de disque pour sauvegarder les données redondantes des données d'écriture du groupe de données, et la génération de nouvelles données redondantes par le premier générateur de données redondantes (320) à partir des données de différence et des précédentes données redondantes, si aucune des conditions dans (i) et (ii) n'est satisfaite et la longueur de données d'écriture est plus grande que la longueur donnée.

2. Dispositif selon la revendication 1, dans lequel la longueur donnée est liée à la longueur de données par tour de l'une des unités de disque pour mémoriser les données d'écriture.

3. Dispositif selon la revendication 1 ou 2, dans lequel le processeur (30) est adapté pour sélectionner :

la génération des données redondantes par le second générateur de données redondantes (130) à partir des données d'écriture provenant du dispositif de niveau supérieur (10), des précédentes données à mettre à jour par les données d'écriture et des données redondantes du groupe de données auquel appartiennent les données d'écriture, si l'opération de mise à jour de données redondantes conformément à (iii) ou (iv) a échoué.

**4.** Dispositif selon l'une quelconque des revendications précédentes, comportant de plus :

des moyens de détermination d'accès séquentiel (38) pour déterminer le mode d'accès séquentiel pour le dispositif de niveau supérieur (10),

dans lequel le processeur (30) est adapté pour attendre une période de temps spécifique avant de sélectionner les opérations de génération de données redondantes, si un accès séquentiel du dispositif de niveau supérieur (10) est spécifié.

**5.** Procédé pour commander un dispositif de réseau de disques, le dispositif de réseau de disques comportant :

une pluralité d'unités de disque (300) pour mémoriser des données d'écriture d'un dispositif de niveau supérieur (10) et mémoriser des données redondantes utilisées pour les données d'écriture,
un sous-ensemble d'unités de disque (300) formant un groupe de données spécifique pour sauvegarder, d'une manière distribuée, des parties divisées de données d'écriture reçues du dispositif de niveau supérieur (10) et des données redondantes générées à partir des données d'écriture, et
un dispositif de commande de disque (20) pour transférer les données d'écriture entre le dispositif de niveau supérieur (10) et les unités de disque (30),

dans lequel le procédé comporte :

le transfert de données d'écriture depuis le dispositif de niveau supérieur vers le dispositif de commande de disque et leur division en parties,
la génération de données redondantes pour les données d'écriture, et
la sauvegarde des données d'écriture et des données redondantes sur les unités de disque,

dans lequel

(i) les données redondantes sont générées dans le dispositif de commande de disque (1160) à partir des données d'écriture du dispositif de niveau supérieur (10) et de données à ne pas mettre à jour par les données d'écriture du groupe de données auquel appartiennent les données d'écriture, si l'expression conditionnelle (1020) de

$$(b+1) \leq 2*(a+1),$$

où les données d'écriture sont divisées en "a" parties, et "b" est le nombre d'unités de disque utilisées dans le groupe de données, sauf pour l'unité de disque qui sauvegarde les données redondantes incluses dans le groupe de données,
est satisfaite,
(ii) la génération des données redondantes dans le dispositif de commande de disque (1170) à partir des données d'écriture provenant du dispositif de niveau supérieur (10), de précédentes données à mettre à jour par les données d'écriture et de données redondantes du groupe de données auquel appartiennent les données d'écriture, si l'expression conditionnelle ci-dessus n'est pas satisfaite (1020) et l'unité de disque pour sauvegarder les données redondantes est en cours d'utilisation (1040),
(iii) le transfert des données d'écriture et des précédentes données à mettre à jour par les parties divisées des données d'écriture vers l'unité de disque (300) pour sauvegarder les données redondantes des données d'écriture du groupe de données et la génération dans celui-ci de données redondantes (1100) à partir des données d'écriture, des précédentes données à mettre à jour par les données d'écriture, et des précédentes données redondantes, si aucune des conditions dans les étapes (i) et (ii) n'est satisfaite et si la longueur de données d'écriture est plus petite ou égale à une longueur donnée, et
(iv) la génération de données de différence dans le dispositif de commande de disque (20), le transfert des données de différence vers l'unité de disque (300) pour sauvegarder les données redondantes des données d'écriture du groupe de données, et la génération de nouvelles données redondantes dans celui-ci (1140) à partir des données de différence et des précédentes données redondantes, si aucune des conditions dans (i) et (ii) n'est satisfaite et la longueur de données d'écriture est plus grande que la longueur donnée (1090).

6. Procédé selon la revendication 5, dans lequel la longueur donnée est liée à la longueur de données par tour de l'une des unités de disque pour mémoriser les données d'écriture.

7. Procédé selon la revendication 5 ou 6, comportant de plus :

la génération des données redondantes (1170) dans le dispositif de commande de disque (20) à partir des données d'écriture provenant du dispositif de niveau supérieur, des précédentes données à mettre à jour par les données d'écriture et des données redondantes du groupe de données auquel appartiennent les données d'écriture, si l'opération de mise à jour de données redondantes conformément à l'étape (iii) ou (iv) a échoué (1110).

8. Procédé selon l'une quelconque des revendications 5 à 7, comportant de plus :

la détermination (1010) de l'accès séquentiel pour le dispositif de niveau supérieur (10), et
l'attente d'une période de temps spécifique (1150) avant la sélection des opérations de génération de données redondantes, si un accès séquentiel depuis le dispositif de niveau supérieur (10) est spécifié.

# FIG. 1

CENTRAL PROCESSING DEVICE 10

~CHANNEL BUS 60    ⌐DISK CONTROL DEVICE 20

40~ HOST I/F    DATA DIVIDER/REPRODUCER
                                    ~80    110

**MICROPROCESSOR** 30

| | |
|---|---|
| CACHE MEMORY REFERENCE FUNCTION | ~31 |
| CACHE DIRECTORY REFERENCE FUNCTION | ~32 |
| DRIVE STATE REFERENCE FUNCTION | ~33 |
| PARITY GENERATOR CONTROL FUNCTION | ~34 |
| DIFFERENCE DATA GENERATOR CONTROL FUNCTION | ~35 |
| DRIVE CONTROLLER CONTROL FUNCTION | ~36 |
| REDUNDANT DATA GENERATING METHOD SELECTING FUNCTION | ~37 |
| SEQUENTIAL ACCESS MODE DETERMINING FUNCTION | ~38 |
| MAPPING FUNCTION | ~39 |

**CACHE MEMORY** 111\ ~112

| WRITE PLANE | READ PLANE |
|---|---|
| 113~ SLOT | SLOT ~116 |
| 114~ SLOT | SLOT ~117 |
| 115~ SLOT | SLOT ~118 |
| ⋮ | ⋮ |

CACHE DIRECTORY ~120

REDUNDANT DATA GENERATOR ~130

DIFFERENCE DATA GENERATOR ~140

| 50 | 50 | 50 | 50 | 50 | 50 | 50 |
|---|---|---|---|---|---|---|
| DRIVE CONTROLLER | DRIVE CONTROLLER | DRIVE CONTROLLER | DRIVE CONTROLLER | DRIVE CONTROLLER | DRIVE CONTROLLER | DRIVE CONTROLLER |

~70 DRIVE BUS    ~70 DRIVE BUS    ~70 DRIVE BUS    ~70 DRIVE BUS    ~70 DRIVE BUS    ~70 DRIVE BUS    ~70 DRIVE BUS

DISK DRIVE 300  DISK DRIVE 300  DISK DRIVE 300  DISK DRIVE 300  DISK DRIVE 300  DISK DRIVE 300  DISK DRIVE 300

EP 1 486 871 B1

# FIG. 2

~70

DISK DRIVE 300

DISK I/F — 310

320 — MICROPROCKSSA      DRIVE BUFFER — 330

340 — DISK CONTROL MECHANISM

350
DISK MEDIUM

# FIG. 3

I/D DATA FROM HOST

| D000 | D001 | D002 | D003 | D004 | D005 |
|------|------|------|------|------|------|

‑ ‑ ‑ ‑ ‑ ‑ ‑

↕ MAPPING

| D000 | D001 | D002 | D003 | D004 | D005 | P000 |
|------|------|------|------|------|------|------|
| D007 | D008 | D009 | D010 | D011 | P001 | D006 |
| D014 | D015 | D016 | D017 | P002 | D012 | D013 |
| D021 | D022 | D023 | P003 | D018 | D019 | D020 |
| D028 | D029 | P004 | D024 | D025 | D026 | D027 |

| DISK DRIVE 300 (300a) | DISK DRIVE 300 (300a) | DISK DRIVE 300 (300a) | DISK DRIVE 300 (300a) | DISK DRIVE 300 (300a) | DISK DRIVE 300 (300a) | DISK DRIVE 300 (300a) |

EP 1 486 871 B1

# FIG. 4

CENTRAL PROCESSING DEVICE 10

260-1 TO 260-4    260-5 TO 260-8    20    DISK CONTROL DEVICE

232-1    232-1    231-2

CACHE MEMORY    HOST ADAPTER    HOST ADAPTER    CACHE MEMORY    232-2    235

COMMUNICATION BUS INSIDE OF CONTROLLER 236

SERVICE PROCESSOR

237-1 DATA TRANSFER BUS
237-2 DATA TRANSFER BUS

DISK ADAPTER    DISK ADAPTER    SHARED MEMORY    SHARED MEMORY    DISK ADAPTER    DISK ADAPTER    233-4
MAINTENANCE TERMINAL    250

233-3    233-1    234-1    234-2    233-2

240 STORAGE DEVICE

270-1 TO 270-4    241-1 DISK DRIVE BOX    270-5 TO 270-8

| 242-1 | 242-5 | 242-9 | 242-13 | 242-17 | 242-21 | 242-25 | 242-29 |
| 242-2 | 242-6 | 242-10 | 242-14 | 242-18 | 242-22 | 242-26 | 242-30 |
| 242-3 | 242-7 | 242-11 | 242-15 | 242-19 | 242-23 | 242-27 | 242-31 |
| 242-4 | 242-8 | 242-12 | 242-16 | 242-20 | 242-24 | 242-28 | 242-32 |

241-2 DISK DRIVE BOX

DISK DRIVE BOX (INCLUDING DISK DRIVES 242-33 TO 242-64)

270-2 TO 270-12    270-13 TO 270-16

EP 1 486 871 B1

# FIG. 5

RECEIVE WRITE DATA FROM
CENTRAL PROCESSING DEVICE
~1000

NO SEQUENTIAL
ACCESS IS
SPECIFIED ?
~1010
— NO → WAIT FOR A SPECIFIC TIME
~1150

YES

NECESSARY
NUMBER OF READS
IN METHOD OF ALL STRIPES≦
NECESSARY NUMBER OF READS IN
METHOD OF READ
AND MODIFY
~1020
— YES → METHOD OF ALL STRIPES
~1160

NO

READ DATA BEFORE UPDATE
~1030

IS DRIVE
FOR SAVING
REDUNDANT DATA
IN USE ?
~1040
— YES →

NO

WRITE DATA LENGTH<
(DATA LENGTH PER CIRCUMFERENCE
OF DISK)×3/4
~1090
— NO → EXECUTE METHOD
OF DIFFERENCE
~1140

YES

EXECUTE METHOD OF
A GENERATION IN A DRIVE
1100

IS UPDATE
OF REDUNDANT
DATA SUCCESSFUl ?
~1110
— NO → METHOD OF READ AND MODIFY
~1170

YES

WRITE NEW DATA
~1120

TERMINATE WRITING PROCESS
~1130

# FIG. 6

WRITE DATA

②

REDUNDANT DATA GENEVATOR

③

WRITE PLANE

READ PLANE

②

①　①　①

④

REDUNDANT DATA

DISK DRIVE 300 (300a)　DISK DRIVE 300 (300b)　DISK DRIVE 300 (300c)　DISK DRIVE 300 (300d)　DISK DRIVE 300 (300e)　DISK DRIVE 300 (300f)　DISK DRIVE 300 (300g)

EP 1 486 871 B1

# FIG. 7

WRITE DATA

② 

WRITE PLANE

② 

READ PLANE

①

DISK DRIVE 300 (300a)  DISK DRIVE 300 (300b)  DISK DRIVE 300 (300c)  DISK DRIVE 300 (300d)  DISK DRIVE 300 (300e)  DISK DRIVE 300 (300f)

WRITE DATA

DATA BEFORE UPDATE

REDUNDANT DATA BEFORE UPDATE

④

③  REDUNDANT DATA

⑤

DISK DRIVE 300 (300g)

EP 1 486 871 B1

# FIG. 8

WRITE DATA

③ → REDUNDANT DATA GENERATOR 130

④

WRITE PLANE

③

READ PLANE

③ REDUNDANT DATA

⑤

①  ①

②

DISK DRIVE 300 (300a)  DISK DRIVE 300 (300b)  DISK DRIVE 300 (300c)  DISK DRIVE 300 (300d)  DISK DRIVE 300 (300e)  DISK DRIVE 300 (300f)  DISK DRIVE 300 (300g)

EP 1 486 871 B1

FIG. 9

# FIG. 10

120

CACHE DIRECTORY

CACHE MANAGEMENT INFORMATION ~121

DATA LENGTH INFORMATION ~122

HOST ACCESS PATTERN INFORMATION ~123

RENDING FLAG INFORMATION ~124

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5613088 A

- JP 05046324 A

### Non-patent literature cited in the description

- **DAVID A. PATTERSON et al.** A Case for Redundant Arrays of Inexpensive Disks (RAID. *University of California Report,* 12 January 1987, 109-116